# EUROPEAN PATENT SPECIFICATION

(11) **EP 1 655 576 B1**
(45) Date of publication and mention of the grant of the patent: **29.04.2015**
(21) Application number: 04025576.2
(22) Date of filing: 27.10.2004
(51) Int. Cl.: G01C 21/32, G06F 1/00

(54) **Navigation system**
Navigationssystem
Dispositif de navigation

(43) Date of publication of application: 10.05.2006
(73) Proprietor: Harman Becker Automotive Systems GmbH, 76307 Karlsbad (DE)
(72) Inventor: Russlies, Lars, 22145 Hamburg (DE)
(74) Representative: Grünecker Patent- und Rechtsanwälte PartG mbB

(56) References cited:
- EP-A- 1 189 409
- EP-A- 1 219 930
- US-A- 5 887 269
- US-A1- 2003 084 313

## Description

The invention is directed to a navigation system and to a method for storing digital navigation data and a method for accessing digital navigation data in a navigation system.

In many circumstances, navigation systems are highly useful in providing a user with information on how to reach a predetermined destination. Such navigation systems are implemented, for example, in handheld GPS devices. As another example, more and more vehicles such as cars are provided with navigation systems.

In the context of vehicles, a navigation system assists a driver by providing driving instructions, e.g. instructions regarding the roads the driver has to take. In particular, a user can input a desired destination, for example, by choosing a specific destination out of a list of previously stored destinations or by entering corresponding coordinates. In addition to the input destination, the navigation system determines a current position, usually with the aid of a GPS system and additional movement sensors. Alternatively, a starting position can also be input manually by a user. Based on the starting point (such as the current position) and the destination, the system then determines route information. Route information is information on how to reach a destination starting from a predetermined starting point.

In order to determine route information, the navigation system uses digital navigation data. Digital navigation data is the data that is necessary for the system to determine navigational or route information. In particular, the digital navigation data comprises digital map data. Furthermore, the digital navigation data can also comprise information on specific places such as restaurants, hotels, gas stations or other points of interest for the user.

Based on a starting point, an endpoint (destination point) and, in particular, the digital map data, the navigation system determines, based on predetermined criteria, how to reach the destination. The route information provided to the user comprises, in particular, information on the roads to be taken.

In today's navigation systems, the digital map data is often stored on a CD or a DVD. For using the navigation system, the disk is loaded into a disk drive that is part of the navigation system. On one disk, the road data for a specific region is stored. During use, the navigation system accesses the data on the disk in order to determine navigational information.

Some navigation systems, for example, which are incorporated in personal digital assistants (PDA) comprise a non-volatile, writable memory in order to store digital map data. In the case of such a navigation system, the digital map data is transferred from a disk such a CD or DVD (or at least part of the map data) via an appropriate link to the navigation system. After that, the data is stored permanently in the PDA.

However, it is a drawback of such a navigation system that, after having stored the navigation data in the memory of the navigation system, the original disk with the data is no longer required. Thus, the navigation data from one disk can be copied and used for a plurality of navigation systems. In other words, the distribution of the navigation data of the disk cannot be controlled and, in particular, not be prevented.

EP 1 189 409 discloses a method and a system for encrypted distribution of geographic data for navigation systems. Such a system includes an authorization server to be connected to a plurality of data distribution terminals. Each data distribution terminal provides data to a distribution medium, which in turn provides the data to a navigation system. The authorization server creates an authorization key and encrypts the requested geographic data.

US 2003/0084313 discloses a map data processing method for handling map data stored on a portable storage medium such as a memory card. A map data vending machine encrypts a portion of the map data to be provided using the serial number of an inserted memory card. The memory card can be inserted in a navigation system where it is determined whether the stored serial number matches with the serial number of the part,and whether the encrypted portion of the map data decrypted using this serial number of the memory card.

A navigation apparatus containing a first hard disk is known from EP 1 219 930. Map data is reported on the first hard disk in a password protected way. The passwords are stored beforehand in a password memory.

US 5,887,269 discloses a data product authorization control for a GPS navigation system. The navigation system is equipped with a memory card interface to reach destination data stored on such a memory card. The stored data information provided on the given memory card is encrypted. The navigation apparatus contains a decryption algorithm to decrypt and encrypt data and authenticate a properly formatted commercial data product.

Therefore, it is the problem underlying the invention to provide a navigation system wherein the distribution and the use of the digital navigation data can be controlled.

This problem is solved by a navigation system in accordance with claim 1.

Stored in an access protected way means that the digital navigation data cannot be accesses freely, i.e., the access is restricted and is only enabled if a correct access code is present. In other words, only a valid access code permits the use of the stored digital navigation data.

An access code is a string or a sequence of alphanumeric digits. An access code is correct or valid if checking the access code yields a (positive) result permitting an access of the data.

Hence, since the navigation system comprises a means for checking an access code and, thus, since the data is stored in an access protected way, the access of the data is only enabled if the checking of the access code yielded a positive result. The access of the digital navigation data can be controlled in a very efficient way.

According to a preferred embodiment, the means for checking an access code can be configured to decrypt the digital navigation data and/or to check an access keyword.

In general, there are different possibilities to store digital navigation data in an access protected way. For example, parts of the data or all the data can be encrypted. In this case, before accessing the digital navigation data, the data has to be decrypted. Preferably, the key for decrypting the digital navigation data comprises or is the access code.

The decryption key can but need not be identical to the encryption key. If both keys are identical, a symmetric encryption method is present whereas in the case of different keys for encryption and decryption, an asymmetric encryption method is present.

According to an advantageous alternative, the digital navigation data can be encrypted using a random number. In this way, an encryption similar to the case of public key encryption methods is obtained. In this context, a key in form of a random number is also called a session key. Such a key is generated once during a session (in which the data is encrypted). The random number can be obtained using any kind of random number generator using (as a seed number), for example, the current time, previous keystrokes of a user, the position as determined by the navigation system etc. Using this session key, the data is encrypted. Afterwards, the session key itself is encrypted using a different predetermined key and, possibly, a different encryption method. When decrypting the data, the session key has to be decrypted first, before decrypting the data using the decrypted session key. This alternative is particularly useful, when using a more secure and, thus, more time-consuming encryption method for encrypting the session key than for encrypting the data itself. In this alternative, the encryption of the data is performed using a symmetric method since the encryption key (the session key) is identical with the decryption key.

According to a further alternative, the digital navigation data need not be encrypted, but the access of the digital navigation data requires an access keyword. Such an access keyword corresponds to a password enabling the access of the digital navigation data.

Other possibilities for storing the digital navigation data in an access protected way are possible as well. In any case, the access of the data is only possible with a valid access code.

According to the invention, the navigation system further comprises a means for creating an access protection code for the digital navigation data.

An access protection code is a code that is used for storing data in an access protected way. For example, the access protection code can be a key for encrypting data. Alternatively, an access protection code can be a code used for blocking the access of the data (without encrypting the data) such that the access is only permitted if a valid access keyword is presented. Accessing the digital navigation data is only possible if the access code matches the access protection code in some way, for example, the access protection code is the encrypting key and the access code is the decrypting key.

The access code and the access protection code can, but need not be derivable from each other. For example, the access code and the access protection code can be like a pair of keys in a public key scheme in which it is not possible to derive the private key (responsible for decryption of the data) from the public key (responsible for the encryption of the data). However, in an alternative embodiment, it is also possible that both the access code and the access protection code are identical.

In order to further restrict the access of the digital navigation data, the means for creating an access protection code, according to a further embodiment of the navigation system, can be configured to create an access protection code using an identification code of the navigation system and/or or an identification code of the digital navigation data. Possible identification codes can comprise a serial number of the navigation system, i.e., the serial number of the device, and/or of a disk on which the digital navigation data is previously stored and/or a version number of the digital navigation data.

In this way, due to such a dependence of the access protection code, the access of the data is coupled to an identification code of the navigation system and/or an identification code of the digital navigation data. In other words, the access protection code is different for the case of navigation systems with different identification codes or digital navigation data with different identification codes.

Then, since the access code has to match the access protection code, a valid access code also depends on the identification code of the navigation system and/or the identification code of the digital navigation data.

Preferably, the identification code of the navigation system and/or the identification code of the digital navigation data can be unique. This is the case, for example, if the identification code comprises a serial number of the navigation system or a disk.

For example, in the case of a unique identification code of the navigation system, this restricts the access of the data to the use of a specific navigation system; if the digital navigation data is stored in the memory of a different navigation system, the access protection code would be different and, therefore, also the corresponding access code.

According to a further embodiment, the navigation system can further comprise a means for encrypting the digital navigation data using the access protection code.

In this case, the encryption key for the digital navigation data depends on the access protection code. In particular, the access protection code can be used as a key for either encrypting the digital navigation data itself or another key that is used for encrypting the digital navigation data such as a session key. The latter case is useful, for example, if a more complicated and time consuming method is used for encrypting a further key using the access protection code than the method for encrypting the digital navigation data using this further key.

Preferably, the previously described navigation systems can further comprise an input means, preferably a keyboard, a disk drive, an air interface and/or an Internet interface for inputting an access code.

In this way, an efficient way for inputting an access code is enabled. Preferably, the disk drive can be an optical disk drive.

Preferably, the previously discussed navigation systems can further comprise a disk drive configured to read an access code stored on a removable disk, preferably on an optical disk.

A removable disk in the sense of this invention is a data carrier that can be loaded into the navigation system and unloaded (removed) from the navigation system during operation of the system. An optical disk can be a CD or a DVD, for example. Preferably, also the digital navigation data can be stored on the same removable disk. Then, all necessary information is stored on the disk, in particular, the digital navigation data to be stored in the memory of the navigation system, on the one hand, and the access code that this to be checked to allow the access of the digital navigation data stored in the navigation system memory, on the other hand.

According to a preferred embodiment, the disk drive can be configured to read a copy protected access code stored on a removal disk.

Since the access code is stored in a copy protected way, a copying of the access code from the disk to a memory is prevented. Therefore, an access of the digital navigation data is only possible if the disk with the copy protected access code is present in the system. This ensures that the circle of users is restricted to people that are in possession of a disk with the copy protected access code.

There are different possibilities of storing the access code in a copy protected way on a removable disk. Preferably, the copy protection can comprise at least one read fault error based on at least one defective sector of the removable disk. Due to defective sectors and corresponding read fault errors, usually, copying is prevented.

The copy protection can alternatively or additionally be based on an electronic fingerprint, very short data tracks (such that the track cannot be copied by a copying device such as a CD burning device, for example), encryption and/or data (parts of the access code or the whole access code) being stored in regions (sectors) that are not accessible by copying devices or that are only accessible or readable by the disk drive of the navigation system. Other methods for storing the access code in a copy protected way are also possible.

According to a further embodiment of the previously discussed navigation systems, the means for checking an access code can be configured to regularly, preferably periodically after a predetermined time interval and/or after a predetermined number of times of accessing the digital navigation data, check an access code during operation of the navigation system.

Regularly checking the access code during operation ensures that not only when starting the navigation system it is checked whether the user is indeed entitled to access the digital navigation data. In particular, in the case where the access code is stored on an disk, this prevents that after starting the navigation system, the disk is removed and used in a different navigation system.

The invention further provides a method according to claim 11 for storing digital navigation data in a navigation system.

In this way, the digital navigation data is stored in the navigation system in such a way that only a restricted number of users (users that are entitled to do so) can access the digital navigation data, and, therefore, use the navigation system. Preferably, the method can comprise creating an access protection code during or after writing the digital navigation into the memory. This means that the access protection code does not exist before writing the digital navigation data into the memory; in other words, the access protection code is not known in advance which increases the security.

According to a preferred embodiment, the access protection code can be created using an identification code of the navigation system and/or an identification code of the stored digital navigation data.

In this way, the access protection of the data depends on the identification code of the navigation system and/or the identification code of the digital navigation data and, thus, is coupled to the specific navigation system and/or the specific version of the data. In particular, the user being entitled to access the data stored in a specific navigation system is not necessarily entitled to also access the data on a different navigation system. In this way, the distribution of the digital navigation data can be controlled in a very efficient way. Possible identification codes can comprise a serial number of the navigation system, i.e., the serial number of the device, and/or of a disk on which the digital navigation data is previously stored and/or a version number of the digital navigation data.

Advantageously, the identification code of the navigation system and/or the identification code of the digital navigation data can be unique.

According to a preferred embodiment, the previously discussed methods can comprise encrypting the digital navigation data using the access protection code.

The invention further provides a method for accessing digital navigation data stored in a non-volatile, writable memory of a navigation system, wherein the digital navigation data is stored in an access protected way, comprising steps of:
providing an access code, and
checking the access code during operation of the navigation system.

With this method, the access of digital navigation data stored in the navigation system is only permitted to users being entitled to do so because of a valid access code.

Preferably, providing an access code can comprise creating an access code using an identification code of the navigation system and/or an identification code of the stored digital navigation data.

In this way, the access code is coupled with an identification code such as the serial number of the navigation system and/or an identification code such as the version number of the stored digital navigation data resulting in a restriction of the access code to a specific navigation system or a specific version of the data.

Advantageously, the identification code of the navigation system and/or the identification code of the digital navigation data can be unique.

Preferably, providing an access code can comprise reading the access code from a removable disk, preferably an optical disk, being loaded into a disk drive of the navigation system.

Alternatively, the access code can be provided using different input means such as a keyboard, and air interface and/or an internet interface.

According to a preferred embodiment, providing an access code can be preceded by reading the digital navigation data from the removable disk being loaded into a disk drive of the navigation system and storing the digital navigation data according to the methods discussed above.

Then, both the digital navigation data and the access code are provided on the same removable disk. After having stored the digital navigation data in the memory of the navigation system, the access if the stored digital navigation data, usually, is faster when compared to accessing the data on the disk. However, for accessing the digital navigation data stored in the memory of the navigation system, it is still necessary to provide a valid access code that is stored on the removable disk as well.

Preferably, the stored access code can be copy protected. Because of that, it is not possible to also copy the access code into the memory of the navigation system.

According to a preferred embodiment, checking the access code can comprise regularly, preferably periodically after a predetermined time interval and/or after a predetermined number of times of accessing the digital navigation data, checking an access code during operation of a navigation system.

The invention also provides a computer program product directly loadable into an internal memory of a digital computer, comprising software code portions for performing the steps of one of the previously discussed methods.

Furthermore, the invention provides a computer program product stored on a medium readable by a computer system comprising computer readable program means for causing a computer to perform the steps of one of the above methods. It is to be understood that a digital computer in this sense also comprises a navigation system, in particular, as described above in which digital data is processed.

Further features and advantages of the invention will be described with respect to the following examples and figures.
- Fig. 1: shows an embodiment illustrating the interplay between an access code and an access protection code for a navigation system;
- Fig. 2: illustrates an example for storing navigation data in a memory;
- Fig. 3: illustrates an example for accessing stored navigation data; and
- Fig. 4: is a flow diagram of an example for providing navigation system using stored navigation data.

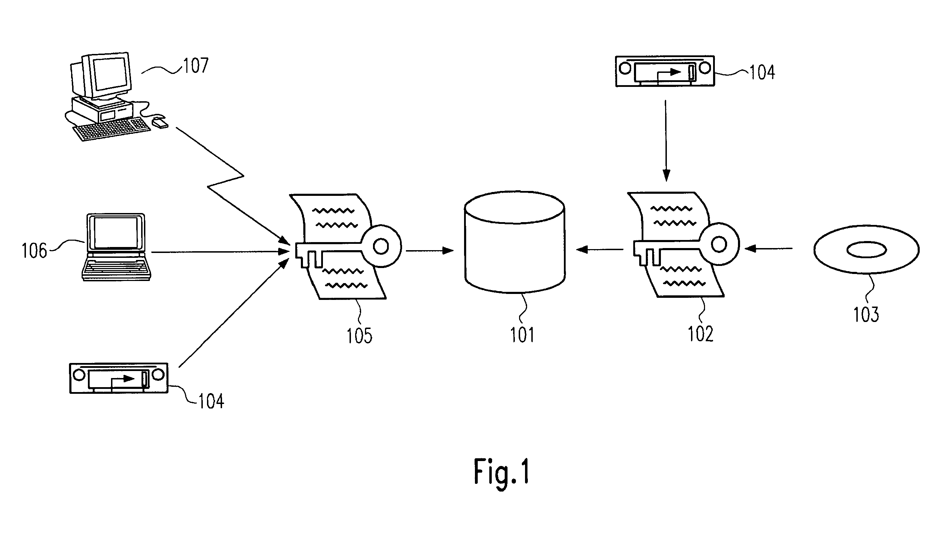

Fig. 1 illustrates for one example the interplay between an access code and access protection code for navigation data stored in a memory. In this figure, a non-volatile, writable memory 101 is shown. This writable memory 101 is a hard drive.

The memory 101 is part of a navigation system mounted in a car, for example, in order to provide a user (i.e. the driver) with navigational information on how to reach a specific destination.

The navigation data comprising, in particular, digital map data, is stored in the memory in an access protected way; the stored data cannot be accessed by anyone in a straightforward way.

In particular, the access of the stored data is protected using an access protection key 102. The protection of the access of the data can be obtained in different ways. For example, the stored data can be encrypted using the access protection key 102. As another example, accessing the stored data can require that a keyword be provided to the system; without a valid keyword, the access is not possible.

In the illustrated example, the access protection code 102 is created using two different inputs. On the one hand, an identification code for the navigation data originally being stored on an optical disk 103 such as a CD or DVD is used. The identification code can correspond to the version number of the data on the data carrier 103 that is to be stored in the memory 101.

In addition to this identification code, an identification code of the navigation system is to be provided. The identification code of the navigation system 104 can correspond to the serial number of the navigation system which is a unique identification code.

These two identification codes are used to create the access protection code 102. This can be achieved in different ways. For example, if the identification code of the navigation data and of the navigation system are not only numbers but also comprise letters, each identification code, firstly, is transformed into a natural number. The resulting two numbers can be combined, for example, by summing or multiplying them. This yields an access protection code in form of a natural number as well. Of course, depending on the type of access protection to be chosen for the stored navigation data, other methods for creating an access protection code are also possible.

In order to access the access protected navigation data, an access code 105 is necessary. The access code 105 can, but need not be identical to the access code 102.

Depending on the kind of access protection of the navigation data, the access code can be used in different ways to enable access of the data. For example, the access code 105 can be used to decrypt encrypted navigation data. Alternatively or additionally, the access code can be only checked and - if this checking yielded a positive result, i.e. the access code is valid - allow a direct access of the stored data without additionally decryption.

The access code 105 can be provided to the navigation system in many different ways. According to a first possibility, the access code 105 can be entered directly via the navigation system 104 itself using the keys of the navigation system or a speech dialog system, for example.

Alternatively, an external device such as a portable terminal 106 can be connected to the navigation system. The access code can be entered via keys of the external device or the access code can be stored in the external device and transmitted to the navigation system upon connection of the device 106 with the navigation system.

According to a further alternative, the access code can be provided in a wireless way. For example, an access code server 107 can be provided which sends the access code on request to the navigation system. To achieve this, the navigation system can be provided with an air interface or an internet interface configured for wireless transmission, for example.

Further alternatives that are not shown in this figure are possible as well. To give only one additional example, a CD or DVD can be loaded into the navigation system on which an access code is stored.

The access code can be provided to the navigation system in a non-volatile way by storing it in the memory of the navigation system. Alternatively, the access code can also be loaded into a volatile internal memory of the navigation system. In this case, after having switched off the navigation system, the access code has to be provided again.

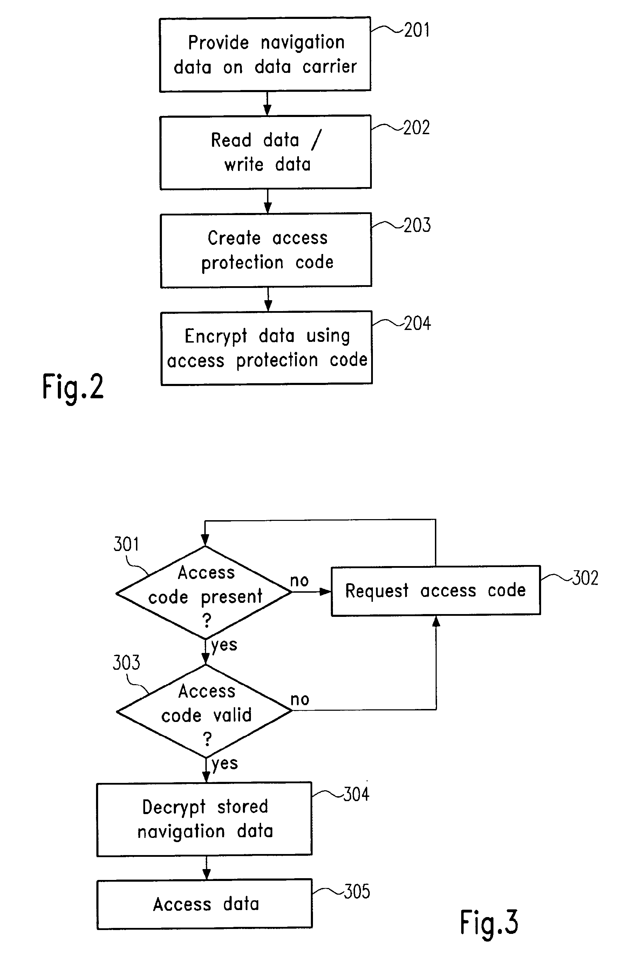

Fig. 2 illustrates how navigation data can be stored in non-volatile, writable memory of a navigation system. In a first step 201, the navigation data is provided on some kind of data carrier. The data carrier can be an optical disk such as a CD or DVD. The navigation data provided in this way comprise, in particular, digital map data.

In addition, the data carrier can have further information stored that can be used by a navigation system. For example, a list of possible destinations and/or of hotels, restaurants, etc. can be provided. The navigation data on the data carrier can, but need not be provided in an access protected way. If the navigation data is provided in an access protected way, an access code is required to access the data on the data carrier.

In the next step 202, the navigation data is read from the data carrier and written to the memory of the navigation system. In this step, only some of the data may be written to the memory. Alternatively, it is also possible to read and write all the data present on the data carrier.

In step 203, an access protection code is created. As already discussed above, there are different possibilities to create such an access protection code depending on the kind of access protection to be used. For example, the access protection code can be intended to encrypt all stored data in the memory. In such a case, a suitable encryption key has to be created. Possible parameters for such an encryption key are the serial number of the navigation system and/or the version number of the navigation data.

However, it is also possible to create an additional session key similar to the case of public encryption methods. As already discussed above, a session key is a random number generated based on predetermined parameters. For example, a random number can be generated from the keystrokes on the keys of the navigation system and/or using positional or movement parameters provided for the navigation system. If a session key is provided, this session key is used to encrypt the navigation data and, then, the session key is encrypted using the access protection key that is based on the serial number of the navigation system and the version number of the navigation data. This is particularly useful if for the encryption of the navigation data using the session a faster but less secure method is used than for the encryption of the session key itself.

In the last step 204, the stored navigation data is encrypted using the access protection code. As already stated before, this encryption need not be performed using directly the access protection code, but can be based on a session key as well. Different encryption methods can be used such as DES, IDEA, RC5, RSA, or DHA.

An example illustrating how to access navigation data that has been stored in an access protected way is illustrated in Fig. 3. In this example, the digital navigation data was stored in an encrypted way.

In a first step 301, it is checked whether any access code is present in the navigation system, for example, due to an input of a user or the presence of a disk on which an access code is stored. If no, an access code is requested (step 302), for example, by a corresponding prompt to a user.

However, if an access code is indeed present, it is checked in a further step 303 whether the access code is actually valid. Again, if the access code is not valid, the method returns to step 302 and asks for an access code.

On the other hand, if a valid access code is present, in the next step 304, the stored navigation data is decrypted using the valid access code. Such a description can be performed in different ways depending on the type of decryption of the stored data. For example, the access code can be used directly as a decryption key for the data. If, on the other hand, a session key was used to encrypt the data as was explained above, the access code can be used to decrypt the session key, which, in turn, serves for decryption of the stored navigation data. After decryption of the stored navigation data, the navigation data can be accessed and further processed if necessary.

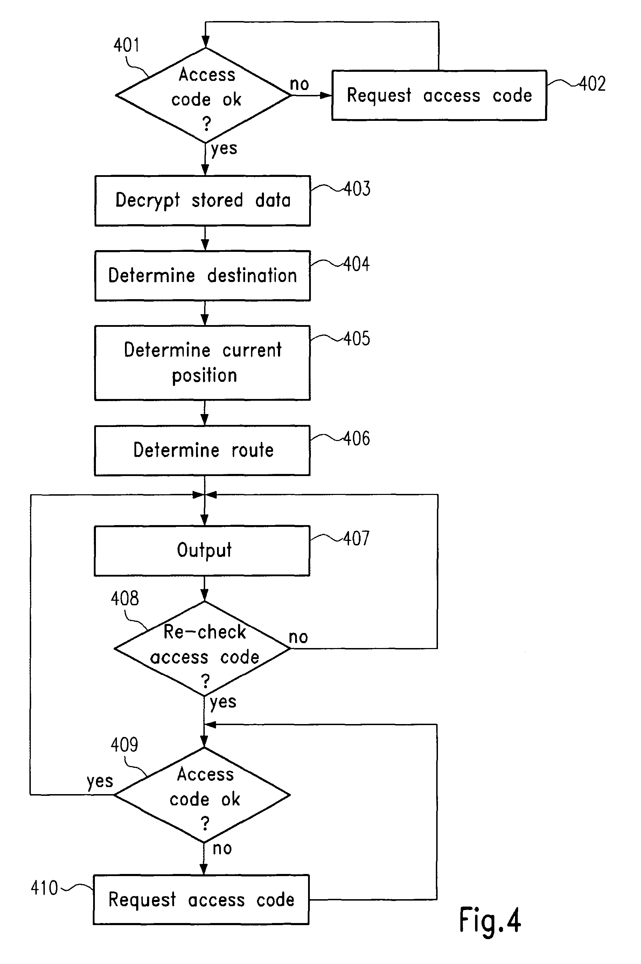

Fig. 4 is a flow diagram illustrating an example of providing a user with navigation or route information in a case where navigation data is stored in an access protected , in particular, encrypted way.

In this example, in the first step 401, an access code is checked. Here, this means that the presence and the validity of an access code are checked. Depending on the result of this checking (step 402), the method continues either with step 403 or step 404. If there is no access code present or the access code is not valid, an access code is requested in step 403, for example, by outputting a corresponding prompt to a user.

On the other hand, if an access code is present and valid, the stored navigation data is decrypted using the access code in step 404. This means that after the decryption, the decrypted navigation data is present in a volatile memory.

In the next step 405, a destination point is determined. This can be achieved in different ways. For example, a user may choose a destination out of a list of previously stored destination. Alternatively, a user can also input a desired destination via corresponding coordinates.

A current position is determined in step 406. Usually, this is done based on satellite information obtained, for example, via a GPS system. In addition to this information, further information stemming from movement sensors (e.g. speed sensor, gyroscope) can be used as well. Based on the current position and the destination and, furthermore, on the decrypted navigation data, particularly, the map data, a route is determined (step 407).

The corresponding route information is output in the following step 408. Route information is the information instructing a user (i.e. a driver) how to drive and which road to take. This route information can be output optically and/or acoustically.

In the next step 409, it is checked whether the access code has to be checked again. This step is particularly useful if the access code is not stored directly in the navigation system but is present on an external data carrier such as a CD or DVD loaded into the navigation system. In such a case, checking the access code repeatedly forces a user to always keep the corresponding data carrier in connection with the navigation system, for example, the corresponding CD in the disk drive of the navigation system. Suitable rechecking criteria can be based on a predetermined time interval after the last time the access code was checked and/or on a predetermined number of times the navigation data was accessed. For example, the access code can be checked every five minutes during operation of the navigation system.

If these criteria are not met, the system returns to step 408 and outputs the upcoming route information. However, if the corresponding criteria are met, the access code is checked in step 410. If the result is positive, i.e. if an access code is present and valid, the method returns to step 408 and continues with the output of the route information.

Should no access code be present or a present access code be invalid, the method continues with step 412 requesting an access code and returns to step 410.

## Claims

1. Navigation system in a vehicle or a handheld GPS device comprising:
a non-volatile, writable memory in form of a hard disk (101) for storing digital navigation data,
a means for checking an access code (105) to allow the access of digital navigation data
stored in the memory, and
a means for creating an access protection code (102) for the digital navigation data.

2. Navigation system according to claim 1, wherein the means for checking an access code is configured to decrypt the digital navigation data and/or to check an access keyword.

3. Navigation system according to claim 1, wherein the access protection code depends on an identification code of the navigation system and/or on an identification code of the digital navigation data.

4. Navigation system according to claim 3, wherein the identification code of the navigation system and/or the identification code of the digital navigation data is unique.

5. Navigation system according to one of the preceding claims, further comprising a means for encrypting the digital navigation data using the access protection code.

6. Navigation system according to one of the preceding claims, further comprising an input means, preferably a keyboard, a disk drive, an air interface and/or an internet interface, for inputting the access code.

7. Navigation system according to one of the preceding claims, further comprising a disk drive configured to read an access code stored on a removable disk, preferably on an optical disk.

8. Navigation system according to claim 7, wherein the disk drive is configured to read a copy protected access code stored on a removable disk.

9. Navigation system according to claim 8, wherein the copy protection comprises at least one read fault error based on at least one defect sector of the removable disk.

10. Navigation system according to one of the preceding claims, wherein the means for checking an access code is configured to regularly, preferably periodically after a predetermined time interval and/or after a predetermined number of times of accessing the digital navigation data, check an access code during operation of the navigation system.

11. Method for storing digital navigation data in a navigation system in a vehicle or a handheld GPS device with a non-volatile, writable memory in form of a hard disk comprising writing the digital navigation data into the memory, wherein an access protection code is created by the navigation system for the digital navigation data.

12. Method according to claim 11, comprising creating the access protection code during or after writing the digital map into the memory.

13. Method according to claim 11 or 12, wherein the access protection code is created using an identification code of the navigation system and/or on an identification code of the digital navigation data.

14. Method according to claim 13, wherein the identification code of the navigation system and/or the identification code of the digital navigation data is unique.

15. Method according to one of the claims 11 - 14, further comprising encrypting the digital navigation data using the access protection code.

16. Method for accessing digital navigation data stored in a non-volatile, writable memory in form of a hard disk of a navigation system, wherein the digital navigation data is stored in an access protected way, comprising the steps of:
reading the digital navigation data from the removable disk loaded into an disk drive of the navigation system and storing the digital navigation data according to method of one of the claims 11 - 15,
providing an access code, and
checking the access code during operation of the navigation system.

17. Method according to claim 16, wherein providing an access code comprises creating an access code using an identification code of the navigation system and/or on an identification code of the digital navigation data.

18. Method according to claim 17, wherein the identification code of the navigation system and/or the identification code of the digital navigation data is unique.

19. Method according to one of the claims 16 -18, wherein providing an access code comprises reading the access code from a removable disk, preferably an optical disk, being loaded into a disk drive of the navigation system.

20. Method according to claim 18 or 19, wherein the stored access code is copy protected.

21. Method according to one of the claims 16 - 20, wherein checking the access code comprises regularly, preferably periodically after a predetermined time interval and/or after a predetermined number of times of accessing the digital navigation data, checking the access code.

22. Computer program product directly loadable into the internal memory of a digital computer, comprising software code portions for performing the steps of the method according to one of the claims 11 - 21.

23. Computer program product stored on a medium readable by a computer system, comprising computer readable program means for causing a computer to perform the steps of the method according to one of the claims 11 - 21.

## Patentansprüche

1. Navigationssystem in einem Fahrzeug oder einer tragbaren GPS-Vorrichtung, umfassend:
einen nicht-flüchtigen, beschreibbaren Speicher in Form einer Festplatte (101) zum Speichern digitaler Navigationsdaten,
ein Mittel zum Prüfen eines Zugriffcodes (105), um Zugriff auf digitale Navigationsdaten zuzulassen, die in dem Speicher gespeichert sind, und
ein Mittel zum Erstellen eines Zugriffschutzcodes (102) für die digitalen Navigationsdaten.

2. Navigationssystem nach Anspruch 1, wobei das Mittel zum Prüfen eines Zugriffcodes dazu konfiguriert ist, die digitalen Navigationsdaten zu entschlüsseln und/oder ein Zugriffpasswort zu prüfen.

3. Navigationssystem nach Anspruch 1, wobei der Zugriffsschutzcode von einem Kennungscode des Navigationssystems und/oder einem Kennungscode der digitalen Navigationsdaten abhängt.

4. Navigationssystem nach Anspruch 3, wobei der Kennungscode des Navigationssystems und/oder der Kennungscode der digitalen Navigationsdaten eindeutig ist.

5. Navigationssystem nach einem der vorangehenden Ansprüche, ferner umfassend ein Mittel zum Verschlüsseln der digitalen Navigationsdaten mithilfe des Zugriffsschutzcodes.

6. Navigationssystem nach einem der vorangehenden Ansprüche, ferner umfassend ein Eingabemittel, vorzugsweise eine Tastatur, ein Plattenlaufwerk, eine Luftschnittstelle und/oder eine Internet-Schnittstelle, zum Eingeben des Zugriffcodes.

7. Navigationssystem nach einem der vorangehenden Ansprüche, ferner umfassend ein Plattenlaufwerk, das zum Lesen eines Zugriffcodes konfiguriert ist, der auf einer entnehmbaren Datenträgerplatte, vorzugsweise einer optischen Datenträgerplatte, gespeichert ist.

8. Navigationssystem nach Anspruch 7, wobei das Plattenlaufwerk dazu konfiguriert ist, einen kopiergeschützten Zugriffcode zu lesen, der auf einer entnehmbaren Datenträgerplatte gespeichert ist.

9. Navigationssystem nach Anspruch 8, wobei der Kopierschutz wenigstens einen Lesefehler basierend auf wenigstens einem Defektsektor der entnehmbaren Datenträgerplatte umfasst.

10. Navigationssystem nach einem der vorangehenden Ansprüche, wobei das Mittel zum Prüfen eines Zugriffcodes dazu konfiguriert ist, regelmäßig, vorzugsweise periodisch nach einem vorgegebenen Zeitintervall und/oder nach einer vorgegebenen Häufigkeit des Zugreifens auf die digitalen Navigationsdaten einen Zugriffcode während des Betriebs des Navigationssystems zu prüfen.

11. Verfahren zum Speichern digitaler Navigationsdaten in einem Navigationssystem in einem Fahrzeug oder einer tragbaren GPS-Vorrichtung mit einem nicht-flüchtigen, beschreibbaren Speicher in Form einer Festplatte, umfassend Schreiben der digitalen Navigationsdaten in den Speicher, wobei von dem Navigationssystem ein Zugriffsschutzcode für die digitalen Navigationsdaten erzeugt wird.

12. Verfahren nach Anspruch 11, umfassend Erstellen des Zugriffschutzcode während des Schreibens oder nach dem Schreiben der digitalen Karte in den Speicher.

13. Verfahren nach Anspruch 11 oder 12, wobei der Zugriffsschutzcode mithilfe eines Kennungscodes des Navigationssystems und/oder an einem Kennungscode der digitalen Navigationsdaten erzeugt wird.

14. Verfahren nach Anspruch 13, wobei der Kennungscode des Navigationssystems und/oder der Kennungscode der digitalen Navigationsdaten eindeutig ist.

15. Verfahren nach einem der Ansprüche 11 - 14, ferner umfassend Verschlüsseln der der digitalen Navigationsdaten mithilfe des Zugriffsschutzcodes.

16. Verfahren zum Zugreifen auf digitale Navigationsdaten, die in einem nicht-flüchtigen beschreibbaren Speicher in Form einer Festplatte eines Navigationssystems gespeichert sind, wobei die digitalen Navigationsdaten in einer zugriffsgeschützten Weise gespeichert sind, folgende Schritte umfassend:
Lesen der digitalen Navigationsdaten von einer entnehmbaren Datenträgerplatte, die im Plattenlaufwerk des Navigationssystems geladen ist, und Speichern der digitalen Navigationsdaten gemäß dem Verfahren nach einem der Ansprüche 11 - 15,
Bereitstellen eines Zugriffcodes, und
Prüfen des Zugriffcodes während des Betriebs des Navigationssystems.

17. Verfahren nach Anspruch 16, wobei das Bereitstellen eines Zugriffcodes das Erstellen eines Zugriffcodes mithilfe eines Kennungscodes des Navigationssystems und/oder eines Kennungscodes der digitalen Navigationsdaten umfasst.

18. Verfahren nach Anspruch 17, wobei der Kennungscode des Navigationssystems und/oder der Kennungscode der digitalen Navigationsdaten eindeutig ist.

19. Verfahren nach einem der Ansprüche 16 bis 18, wobei das Bereitstellen eines Zugriffcodes das Lesen des Zugriffcodes von einer entnehmbaren Datenträgerplatte, vorzugsweise einer optischen Datenträgerplatte, umfasst, die in ein Plattenlaufwerk des Navigationssystems geladen ist.

20. Verfahren nach Anspruch 18 oder 19, wobei der gespeicherte Zugriffcode kopiergeschützt ist.

21. Verfahren nach einem der Ansprüche 16 bis 20, wobei das Prüfen des Zugriffcodes ein regelmäßiges, vorzugsweise periodisches Prüfen nach einem vorgegebenen Zeitintervall und/oder nach einer vorgegebenen Häufigkeit des Zugreifens auf die digitalen Navigationsdaten, des Zugriffcodes.

22. Computerprogrammprodukt, das direkt in den internen Speicher eines digitalen Computers geladen werden kann und Softwarecodeabschnitte zum Durchführen der Schritte des Verfahrens nach einem der Ansprüche 11 bis 21 umfasst.

23. Computerprogrammprodukt, das auf einem Medium gespeichert ist, das von einem Computersystem lesbar ist, umfassend computerlesbare Programmittel, um einen Computer zu veranlassen, die Schritte des Verfahrens nach einem der Ansprüche 11 bis 21 auszuführen.

## Revendications

1. Système de navigation dans un véhicule ou un dispositif GPS portatif comprenant :
une mémoire inscriptible, non-volatile sous forme d'un disque dur (101) pour le stockage des données de navigation numériques,
un moyen pour vérifier un code d'accès (105) pour permettre l'accès aux données de navigation numériques stockées dans la mémoire, et
un moyen pour créer un code de protection de l'accès (102) pour les données de navigation numériques.

2. Système de navigation selon la revendication 1, dans lequel le moyen pour vérifier un code d'accès est configuré pour décrypter les données de navigation numériques et/ou de vérifier un mot-clé d'accès.

3. Système de navigation selon la revendication 1, dans lequel le code de protection de l'accès dépend d'un code d'identification du système de navigation et/ou d'un code d'identification des données de navigation numériques.

4. Système de navigation selon la revendication 3, dans lequel le code d'identification du système de navigation et/ou du code d'identification des données de navigation numériques est unique.

5. Système de navigation selon l'une quelconque des revendications précédentes, comprenant également un moyen pour crypter les données de navigation numériques en utilisant le code de protection de l'accès.

6. Système de navigation selon l'une quelconque des revendications précédentes, comprenant également un moyen de saisie, de préférence un clavier, un lecteur de disque, une interface radio et/ou une interface Internet, pour saisir le code d'accès.

7. Système de navigation selon l'une quelconque des revendications précédentes comprenant également un disque configuré pour lire un code d'accès stocké sur un disque amovible, de préférence sur un disque optique.

8. Système de navigation selon la revendication 7, dans lequel le disque est configuré pour lire un code d'accès protégé contre la copie stocké sur un disque amovible.

9. Système de navigation selon la revendication 8, dans lequel la protection contre la copie comprend au moins une erreur de mauvaise lecture basée sur au moins un secteur défectueux du disque amovible.

10. Système de navigation selon l'une quelconque des revendications précédentes, dans lequel le moyen pour vérifier un code d'accès est configuré pour régulièrement, de préférence périodiquement après un intervalle de temps prédéterminé et/ou après un nombre prédéterminé de fois d'accès aux données de navigation numériques, vérifier un code d'accès lors du fonctionnement du système de navigation.

11. Procédé permettant de stocker des données de navigation numériques dans un système de navigation dans un véhicule ou un dispositif GPS portatif comportant une mémoire inscriptible, non-volatile sous la forme d'un disque dur comprenant l'écriture des données de navigation numériques dans la mémoire, dans lequel un code de protection de l'accès est créé par le système de navigation pour les données de navigation numériques.

12. Procédé selon la revendication 11, comprenant la création d'un code de protection de l'accès pendant ou après l'écriture de la carte numérique dans la mémoire.

13. Procédé selon la revendication 11 ou 12, dans lequel le code de protection de l'accès est créé à l'aide d'un code d'identification du système de navigation et/ou d'un code d'identification des données de navigation numériques.

14. Procédé selon la revendication 13, dans lequel le code d'identification du système de navigation et/ou du code d'identification des données de navigation numériques est unique.

15. Procédé selon l'une des revendications 11 à 14, comprenant également le codage des données de navigation numériques à l'aide du code de protection de l'accès.

16. Procédé permettant d'accéder aux données de navigation numériques stockées dans une mémoire inscriptible, non volatile sous la forme d'un disque dur d'un système de navigation, dans lequel les données de navigation numériques sont stockées avec une protection de l'accès, comprenant les étapes suivantes :
la lecture des données de navigation numériques à partir du disque amovible chargé dans le lecteur de disque du système de navigation et le stockage des données de navigation numériques selon le procédé de l'une des revendications 11 à 15.
l'utilisation d'un code d'accès, et
la vérification du code d'accès au cours du fonctionnement du système de navigation.

17. Procédé selon la revendication 16, dans lequel l'utilisation d'un code d'accès comprend la création d'un code d'accès à l'aide d'un code d'identification du système de navigation et/ou d'un code d'identification des données de navigation numériques.

18. Procédé selon la revendication 17, dans lequel le code d'identification du système de navigation et/ou du code d'identification des données de navigation numériques est unique.

19. Procédé selon l'une des revendications 16 à 18, dans lequel l'utilisation d'un code d'accès comprend la lecture du code d'accès à partir d'un disque amovible, de préférence un disque optique, qui est chargé dans le lecteur de disque du système de navigation.

20. Procédé selon la revendication 18 ou 19, dans lequel le code d'accès stocké est protégé contre la copie.

21. Procédé selon l'une des revendications 16 à 20, dans lequel la vérification du code d'accès comprend de régulièrement, de préférence périodiquement après un intervalle de temps prédéterminé et/ou après un nombre prédéterminé de fois d'accès aux données de navigation numériques, vérifier le code d'accès.

22. Produit de programme informatique chargeable directement dans la mémoire interne d'un ordinateur numérique, comprenant des parties de code de logiciel permettant de réaliser les étapes du procédé selon l'une des revendications 11 à 21.

23. Produit de programme informatique stocké sur un support lisible par un système informatique, comprenant un moyen de programme lisible par ordinateur causant un ordinateur à réaliser les étapes du procédé selon l'une des revendications 11 à 21.
